# EUROPÄISCHE PATENTSCHRIFT

(11) **EP 1 852 214 B1**
(45) Veröffentlichungstag und Bekanntmachung des Hinweises auf die Patenterteilung: **12.11.2008**
(21) Anmeldenummer: 07008276.3
(22) Anmeldetag: 24.04.2007
(51) Int. Cl.: B23Q 3/155, B23Q 7/14

(54) **Werkstückspanneinrichtung mit Werkzeugträger**
Workpiece clamping device with tool carrier
Dispositif de serrage d'une pièce, muni d'un porte-outil

(30) Priorität: 05.05.2006 DE 102006020895
(43) Veröffentlichungstag der Anmeldung: 07.11.2007
(73) Patentinhaber: Gebr. Heller Maschinenfabrik GmbH, 72622 Nürtingen (DE)
(72) Erfinder: Bauer, Walter, 72622 Nürtingen (DE); Fetzer, Max, 72584 Hülben (DE)
(74) Vertreter: Rüger, Barthelt & Abel Patentanwälte

(56) Entgegenhaltungen:
- DE-A- 10 239 270
- DE-A1- 3 243 335
- DE-A1- 3 707 318

## Beschreibung

Die Erfindung betrifft eine Vorrichtung zur Bearbeitung, insbesondere spanenden Bearbeitung von Werkstücken in Werkzeugmaschinen. Insbesondere betrifft die Erfindung eine Vorrichtung zur Bearbeitung von Ausgleichsgehäusen in Bearbeitungszentren.

Für die Bearbeitung von Werkstücken, auch von kompliziert geformten Werkstücken und Maschinenteilen, werden häufig Maschinen eingesetzt, die allgemein für verschiedene Bearbeitungsvorgänge eingesetzt werden können und die für verschiedene Werkstücke geeignet sind. Zur Anpassung an bestimmte Werkstücke sind dann meist spezielle Vorrichtungen und auch Werkzeuge vorgesehen, die für das spezifische Werkstück und den spezifischen Bearbeitungsvorgang eingerichtet sind.

Beispielsweise offenbart die DE 41 42 121 A1 wie auch die DE 37 07 318 A1 eine Taktstraße mit einzelnen Bearbeitungsstationen, die jeweils zumindest eine Bearbeitungsspindel zur Durchführung einer spanenden Bearbeitung an einem Werkstück aufweisen. Die Werkzeuge sind in Werkzeugmagazinen gehalten.

Zur Lagerung von Werkstücken in den Bearbeitungsstationen offenbart die DE 32 43 335 A1 Spezielle Werkstückträger, die das Werkstück in verschiedenen Positionen halten kann.

Die Taktstraße gemäß DE 41 42 121 A1 dient zur Bearbeitung von auch als "Differentialkorb" oder "Ausgleichsgetriebegehäuse" bezeichneten Ausgleichsgehäusen von Kraftfahrzeug-Differentialgetrieben. Das Dokument nennt sowohl einen Werkstücktransfer, bei dem die Werkstücke auf Paletten aufgespannt sind, als auch einen so genannten vorrichtungslosen Transfer, bei dem die Ausgleichsgehäuse von Bearbeitungsstation zu Bearbeitungsstation ohne gesonderte Vorrichtung weiter gegeben werden. Die einzelnen Bearbeitungsstationen sind jeweils auf spezifische Arbeitsgänge eingerichtet. Im Ergebnis ist die Taktstraße in der spezifisch eingerichteten Form nur zur Bearbeitung von Ausgleichsgehäusen geeignet. Sollen andere Werkstücke bearbeitet werden sind umfangreiche Umrüstmaßnahmen erforderlich.

Ausgleichsgehäuse sind hohl ausgebildete Werkstücke, die an ihren Innenflächen zu bearbeiten sind. Dazu offenbart z.B. die DE 41 04 474 C1 ein Werkzeug, das mit einem Steilkegelschaft zur Befestigung in einer Arbeitsspindel eingerichtet ist. Sein Schneidwerkzeug ist an dem Werkzeugkörper schwenkbar gelagert, wobei die Schwenkbewegung durch eine Verstellstange bewirkt wird.

Mit einem solchen Werkzeug lassen sich in hohlen Werkstücken Kugelflächen bearbeiten. Davon abweichende Flächen können nicht oder nur schwierig bearbeitet werden.

Die DE 102 39 270 A1 offenbart eine Vorrichtung zur Bearbeitung von Ausgleichsgehäusen mit einem Senkwerkzeug, das in den Innenraum des Ausgleichsgehäuses einzuführen ist. Das Senkwerkzeug weist stirnseitig offene Kupplungsöffnungen auf, in die zwei motorisch antreibbare, axial verschiebbare Antriebsdorne einführbar sind, die von entgegen gesetzten Stirnseiten her mit einer Kupplungsspitze in die Kupplungsöffnungen drehfest einführbar sind.

Die Verwendung dieses Konzepts setzt das Vorhandensein einer Werkzeugmaschine mit zwei einander gegenüber liegend und koaxial zueinander angeordneten Arbeitsspindeln voraus.

Dies gilt auch im Hinblick auf die JP 2005-34974, die die Bearbeitung von Ausgleichsgehäusen auf einer zweispindligen Maschine offenbart. Das Werkzeug ist in einem Lagerträger gehalten, der durch eine Betätigungseinrichtung in das Ausgleichsgehäuse hinein und aus diesem heraus gefahren werden kann.

Letztendlich handelt es sich hierbei um Spezialmaschinen, die eine Sonderanschaffung darstellen.

Es werden jedoch zunehmend Rufe nach einer flexibleren Verwendung von angeschafften Werkzeugmaschinen laut.

Daher ist es Aufgabe der Erfindung, eine Möglichkeit anzugeben, mit der Werkstücke, insbesondere Ausgleichsgehäuse, effizient zu fertigen sind. Außerdem war ein entsprechendes Verfahren zu schaffen.

Diese Aufgabe wird durch Schaffung der Vorrichtung mit den Merkmalen des Patentanspruchs 1 sowie des Verfahrens mit dem Merkmalen des Anspruchs 18 gelöst:

Die erfindungsgemäß vorgesehene Vorrichtung enthält außer einer Basis zur Lagerung und Spannung des Werkstücks während der Bearbeitung außerdem ein Werkzeug, das wenigstens im Ruhezustand von der Basis getragen ist. Es ist bedarfsweise an eine Arbeitsspindel der Werkzeugmaschine, beispielsweise in Form eines Bearbeitungszentrums, übergebbar. Weil das Werkzeug an der Vorrichtung vorgesehen ist, sind an der Werkzeugmaschine (dem Bearbeitungszentrum) keine besonderen insbesondere keine ungewöhnlichen Einrichtungsmaßnahmen für den Bearbeitungsvorgang erforderlich. Deshalb sind sowohl Klein- und Kleinstserien als auch Großserien bearbeitbar. Es ist möglich, mit gemischten Losen zu arbeiten, bei denen in einem Bearbeitungszentrum nacheinander ganz unterschiedliche Werkstücke, z.B. Ausgleichsgehäuse und anderweitige Maschinenteile, z.B. Kurbelwellen bearbeitet werden.

Bei einer bevorzugten Ausführungsform ist das Werkzeug an der Basis von einer Positioniereinrichtung getragen, mittels derer das Werkzeug zwischen einer Ruheposition und einer Arbeitsposition bewegbar gehalten ist. Die Positioniereinrichtung kann eine fluidbetätigte oder eine elektromotorische Antriebseinrichtung enthalten und beispielsweise als Linearstelleinrichtung ausgebildet sein. Damit kann das Werkzeug in den Innenraum des beispielsweise als Hohlkörper ausgebildeten Werkstücks z.B. in Form eines Ausgleichsgehäuses ein- und ausgefahren werden.

Die Halteeinrichtung ist vorzugsweise so beschaffen, dass sie das Werkzeug in Ruheposition festhält während sie das Werkzeug, nachdem es in Arbeitsposition überführt und z.B. an eine Arbeitsspindel angekoppelt ist, freigibt. Sie kann dann in ihre Ruheposition zurück fahren während das Werkzeug in Arbeitsposition bleibt. Dadurch behindert die Positioniereinrichtung den von dem Werkzeug auszuführenden Bearbeitungsvorgang nicht.

Das Werkzeug ist vorzugsweise zur spanenden Bearbeitung eingerichtet und z.B. als Fräswerkzeug ausgebildet. Es kann sich um einen Planfräser, um einen Fräser für gekrümmte Flächen, um ein Senkwerkzeug oder dergleichen handeln. Damit können sowohl ebene, im Innenraum eines Ausgleichsgehäuses angeordnete Lagerflächen als auch sphärische oder anderweitig gekrümmte Flächen, z.B. als Stütz- oder Lagerflächen für die Planeten des Ausgleichsgetriebes bearbeitet werden.

Das Werkzeug ist vorzugsweise mit einer Kupplungseinrichtung zur Ankopplung des Werkzeugs innerhalb des Werkstücks an eine Arbeitsspindel der Werkzeugmaschine versehen. Die Kupplungseinrichtung kann ein formschlüssiger Sitz sein, an den ein Adapter anschließbar ist. Der formschlüssige Sitz schafft insbesondere eine drehfeste Verbindung zwischen dem Adapter und dem Werkzeug. Außerdem schafft die Kupplungseinrichtung vorzugsweise einen spielfreien Sitz des Werkzeugs an dem Adapter, um sicherzustellen, dass das Werkzeug während der spanenden Bearbeitung des Werkstücks von der Arbeitsspindel geführt ist. Der Adapter kann außerdem dazu eingerichtet sein, das Werkzeug an dem Werkstück abzustützen, insbesondere zu lagern. Z.B. kann es einen unrunden oder auch runden, bspw. zylindrischen Schaft aufweisen, der eine Bohrung des Werkstücks durchragt und sich an deren Wand abstützt. Die Bohrung kann eine Querbohrung oder eine Achsbohrung des Ausgleichsgehäuses sein. Der Durchmesser des Adapterschafts ist dazu auf den Durchmesser der Bohrung abgestimmt.

Vorzugsweise enthält die Vorrichtung außerdem eine Gegenhalteeinrichtung, um das Werkzeug bezüglich seiner Drehachse axial abzustützen. Die Gegenhalteeinrichtung kann durch eine drehbar gelagerte Spindel axial verstellbar gehalten sein, die an der Vorrichtung vorgesehen ist. Damit ist an der Werkzeugmaschine keine zweite Arbeitsspindel erforderlich.

Die Vorrichtung weist vorzugsweise eine Vielzahl fluidbetätigter Aktoren, beispielsweise zur Betätigung von Halteeinrichtungen auf, die das Werkstück zumindest während der Bearbeitung festklemmen. Weitere Aktoren können dazu vorgesehen sein, die Gegenhalteeinrichtung sowie die Positioniereinrichtung für das Werkzeug zu steuern. Zum An- und Abkuppeln entsprechender Medien, beispielsweise Druckluft und/oder Hydraulikfluid, sowie gegebenen- und erforderlichenfalls auch elektrischer Versorgungsleitung oder Messleitungen sind vorzugsweise entsprechende Kupplungseinrichtungen vorgesehen, um die Vorrichtung in der Werkzeugmaschine mit den geforderten Medien versorgen und an externe Einrichtungen anschließen zu können.

Weitere Einzelheiten vorteilhafter Ausführungsformen der Erfindung ergeben sich aus der Zeichnung, der Beschreibung sowie Ansprüchen. Kleine Details von Ausführungsformen der Erfindung sind ebenfalls der Zeichnung zu entnehmen.

In der Zeichnung ist ein Ausführungsbeispiel der Erfindung veranschaulicht. Es zeigen:
- Figur 1: ein Bearbeitungszentrum mit einer erfindungsgemäßen Vorrichtung in schematisierter perspektivischer Darstellung,
- Figur 2 bis 4: ein Ausgleichsgehäuse zur Bearbeitung auf dem Bearbeitungszentrum gemäß Figur 1 in verschiedenen perspektivischen Darstellungen,
- Figur 5: eine Vorrichtung zur Aufnahme des Ausgleichsgehäuses nach Figur 2 bis 4 zur Bearbeitung desselben in dem Bearbeitungszentrum nach Figur 1 in schematisierter Seitenansicht,
- Figur 6: die Vorrichtung nach Figur 5 in teilweise geschnittener Seitenansicht mit Werkzeug in Ruheposition,
- Figur 7: die Vorrichtung nach Figur 5 mit teilweise geschnittenem Werkstück und Werkzeug in Bearbeitungsposition,
- Figur 8: das Werkzeug und ein zugehöriger Adapter in Kupplungsstellung.

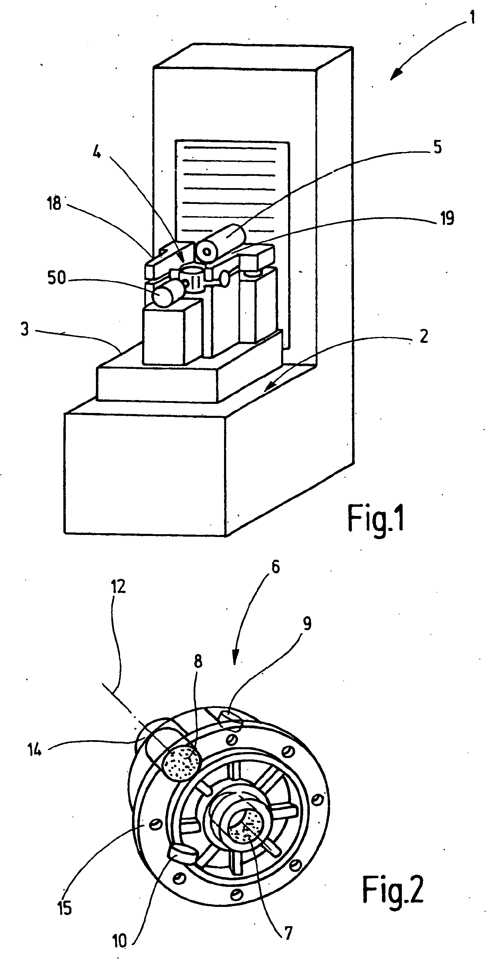

In Figur 1 ist eine Werkzeugmaschine 1 veranschaulicht, die nach Art eines Bearbeitungszentrums ausgebildet ist. Die Einhausung des Arbeitsraums ist in der Zeichnung weg gelassen. Die Werkzeugmaschine 1 weist zumindest einen Tisch 2 auf, auf dem eine Vorrichtung 3 platziert werden kann, die das Werkstück 4 hält. Die Vorrichtung 3 bildet ein in sich abgeschlossenes Modul, das mit dem Werkstück 4 gemeinsam durch verschiedene Bearbeitungsstationen transportiert werden kann. Alternativ ist es möglich, die Vorrichtung 3 in der Werkzeugmaschine 1 zu belassen und lediglich das Werkstück 4 jeweils zur Bearbeitung in die Vorrichtung 3 einzusetzen. Die Vorrichtung 3 wird in der Werkzeugmaschine 1 vorzugsweise ruhend platziert. Der Tisch 2 kann jedoch auch mit Mitteln versehen sein, um die Vorrichtung 3 in einer oder in mehreren Richtungen kontrolliert zu bewegen.

Zu der Werkzeugmaschine 1 gehört des Weiteren zumindest eine Arbeitsspindel 5, die in zumindest einer Raumrichtung, vorzugsweise in mehreren Raumrichtungen bewegbar ist und die dazu eingerichtet ist, ein Werkzeug drehend anzutreiben. Die Arbeitsspindel 5 ist z.B. horizontal orientiert. Sie kann auch in anderen Raumrichtungen, z.B. vertikal orientiert sein. Es können auch mehrere z.B. parallel zueinander angeordnete Arbeitsspindeln vorgesehen sein, die gleichzeitig z.B. jeweils mit einem Werkstück in Eingriff gebracht werden. So können auf einer Vorrichtung mehrere gleiche oder unterschiedliche Werkstücke gespannt und gleichzeitig bearbeitet werden.

Das Werkstück 4 ist im vorliegenden Ausführungsbeispiel ein Ausgleichsgehäuse 6, das zu einem Kraftfahrzeug-Differentialgetriebe gehört. Das Ausgleichsgehäuse 6 weist eine Anzahl von nacheinander zu bearbeitenden Flächen auf, von denen einige in dem von dem Ausgleichsgehäuse 6 umschlossenen Innenraum liegen. Zu den zu bearbeitenden Flächen gehören Achsbohrungen 7, 8, Querbohrungen 9, 10 für die Planetenräder und eine im Inneren des Ausgleichsgehäuses 6 gelegene Formfläche 11, die ebene Abschnitte und sphärische Abschnitte aufweist. Die Achsbohrungen 7, 8 sind koaxial zu einer gemeinsamen Drehachse 12 angeordnet und in kurzen, als Rohrfortsätze 13, 14 ausgebildeten Lagersitzen angeordnet. An einer Seite des Ausgleichsgehäuses 6 ist ein Flansch 15 ausgebildet, der mit Befestigungsbohrungen 16 versehen ist.

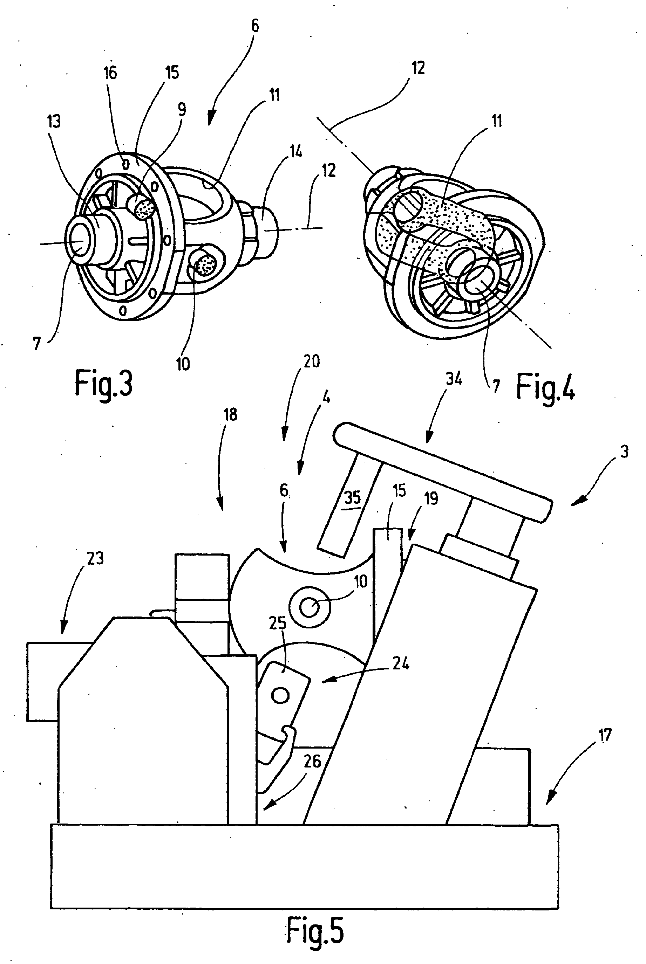

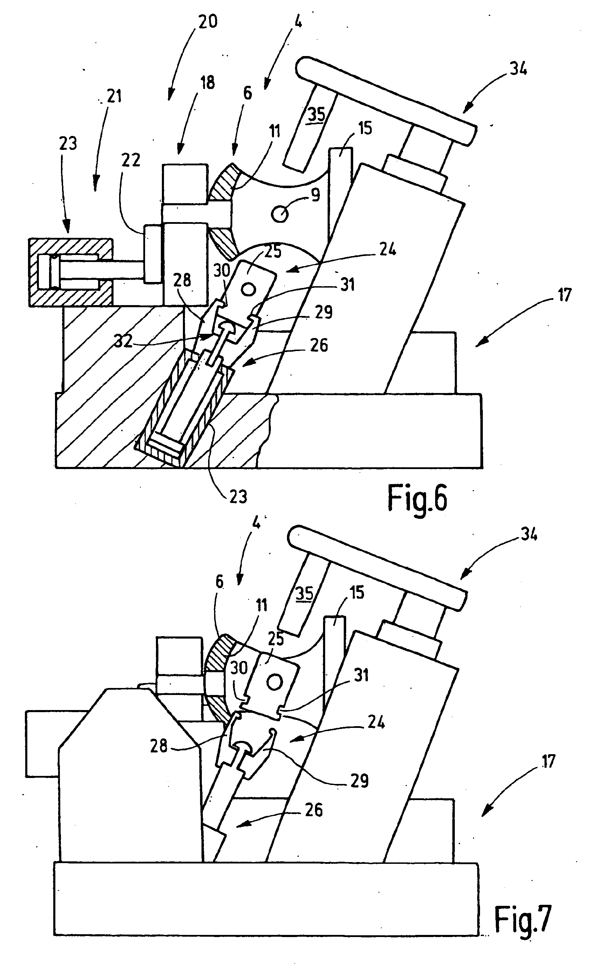

Die Vorrichtung 3 zur Bearbeitung des Ausgleichsgehäuses 6 in dem Bearbeitungszentrum (Werkzeugmaschine 1) ist in den Figuren 5 bis 7 gesondert und vereinfacht veranschaulicht. Zu der Vorrichtung 3 gehört eine Basis 17 in Form einer Grundplatte, eines Grundgerüsts, Grundgestells oder allgemein einer Trägervorrichtung. Die Basis 17 ist darauf eingerichtet, mit dem Tisch 2 der Werkzeugmaschine 1 verbunden zu werden. An der Basis 17 sind Spannmittel 18, 19 (Figur 1) für das Ausgleichsgehäuse 6 vorgesehen, die eine Spanneinrichtung 20 zum Festspannen des Ausgleichsgehäuses 6 oder eines sonstigen Werkstücks 4 an der Vorrichtung 3 bilden. Die Spannmittel 18, 19 sind vorzugsweise Lagerprismen für die Rohrfortsätze 13, 14 sowie zugeordnete Spannpratzen, die mit einer geeigneten Betätigungseinrichtung, wie beispielsweise Hydraulikzylindern, verbunden sind. Zusätzlich können zu der Spanneinrichtung 20 ein oder mehrere Ausrichteinrichtungen 21 gehören, um dem Ausgleichsgehäuse 6 eine gewünschte Drehposition und Axialposition zu erteilen. In Figur 6 ist stellvertretend für weitere, nicht veranschaulichte Ausrichteinrichtungen als Ausrichteinrichtung 21 ein Druckfinger 22 veranschaulicht, der mittels eines Hydraulikzylinders 23 zu betätigen ist und der das Ausgleichsgehäuse 6 vor dem Festspannen axial in eine definierte Position schiebt.

Das Ausgleichsgehäuse 6 wird in der Vorrichtung 3 vorzugsweise, wie in den Figuren 5 bis 7 veranschaulicht, mit horizontaler Ausrichtung seiner Querbohrungen 9, 10 gehalten. In dem Ausgleichsgehäuse 6 vorgesehene größere Fensterausschnitte weisen somit vertikal nach oben und nach unten während die Achsbohrungen 7, 8 ebenfalls horizontal orientiert sind.

An der Basis 17 ist vorzugsweise unterhalb des Werkstücks 4 ein Werkzeugspeicherraum 24 vorgesehen. Dieser dient zur Aufnahme und Zwischenspeicherung von ein oder zwei oder mehreren Werkzeugen. Im vorliegenden Ausführungsbeispiel ist dies für lediglich ein Werkzeug 25 veranschaulicht, das als Fräswerkzeug ausgebildet ist und zur Bearbeitung der Formfläche 11 oder von Abschnitten derselben dient. Das Werkzeug 25 ist von einer Positioniereinrichtung 26 zumindest zwischen einer Ruheposition gemäß Figur 5 und einer Arbeitsposition verstellbar, in der das Werkzeug 25 in der Position gemäß Figur 7 steht. Die Positioniereinrichtung 26 kann das Werkzeug 25 somit aus dem Werkstück 4 heraus und in dieses hinein bewegen. Die Positioniereinrichtung 26 ist mit dem Werkzeug 25 vorzugsweise lösbar über eine Greifereinrichtung 27 verbunden. Alternativ ist es möglich, das Werkzeug 25 an einem Ausleger der Positioniereinrichtung 26 beweglich, beispielsweise drehbar zu lagern und darauf zu verzichten, das Werkzeug 25 von der Positioniereinrichtung 26 zu trennen.

Die Greifeinrichtung 27 enthält vorzugsweise wenigstens zwei Klauen 28, 29, die in entsprechende Ausnehmungen 30, 31 des Werkzeugs 5 fassen, um dieses temporär zu halten. Die Klauen 28, 29 können mit den Ausnehmungen 30, 31 jeweils Rastkupplungen bilden, durch die das Werkzeug 25 an die Positioniereinrichtung 26 an- und von dieser abgekuppelt werden kann, indem die Klauen 28, 29 auf das Werkzeug 25 zu oder von diesem weg bewegt werden. Die Klauen 28, 29 sind vorzugsweise radial nach außen schwenkbar gelagert, wobei sie durch eine Feder 32 radial nach innen vorgespannt sein können.

Zu der Positioniereinrichtung 26 gehört, wie in Figur 6 dargestellt, beispielsweise ein Hydraulikzylinder 33 mit darin verschiebbar gelagerten Kolben, wobei die Kolbenstange mit den Klauen 28, 29 verbunden ist.

Zu der Positioniereinrichtung 26 kann außerdem eine Nachdrückeinrichtung 34 gehören, die mit einem Finger 35 versehen ist, der koaxial zu der Positioniereinrichtung 26 und dieser gegenüber liegend angeordnet ist. Er kann dazu dienen, das Werkzeug 25 zwischen die Klauen 28, 29 zu pressen, um die Rastverbindung zwischen den Klauen 28, 29 und dem Werkzeug 25 herzustellen.

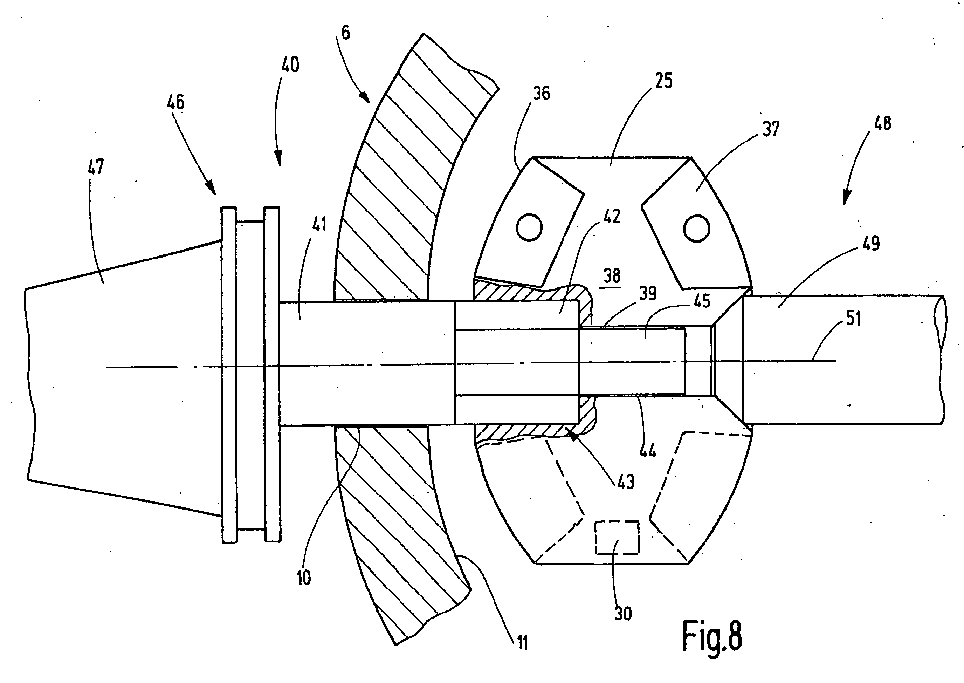

Figur 8 veranschaulicht das Werkzeug 25 innerhalb des Ausgleichsgehäuses 6 in Arbeitsposition. Die Klauen der Positioniereinrichtung 26 sind von dem Werkzeug 25 gelöst. Das Werkzeug 25 ist in diesem Ausführungsbeispiel als Formfräser ausgebildet, der mit mehreren Schneidplatten 36, 37 versehen ist. Sein Werkzeugkörper 38 weist dazu entsprechende Plattensitze auf. Wie in Figur 8 veranschaulicht, ist der Werkzeugkörper 38 außerdem mit einer Bohrung, beispielsweise einer Durchgangsbohrung 39 versehen, die zum Anschluss an die Arbeitsspindel 5 dient. Dazu ist im vorliegenden Beispiel ein Adapter 40 vorgesehen, der einen beispielsweise zylindrischen Hals 41 aufweist, der durch eine Öffnung des Ausgleichsgehäuses 6, beispielsweise durch seine Querbohrung 10 passt. Der Hals 41 ist an seinem dem Werkzeug 25 zugewandten Ende mit einem Kupplungsmittel 42 zum drehfesten formschlüssigen Verbinden des Adapters 40 mit dem Werkzeug 25 versehen. Das Kupplungsmittel 42 wird z.B. durch einen unrunden Abschnitt des Halses 41 beispielsweise durch einen Sechskantabschnitt gebildet. Entsprechend weist die Bohrung 39 einen dazu passend geformten Abschnitt 43 auf. Außerdem kann sie einen zylindrischen Abschnitt 44 geringeren Durchmessers aufweisen, in die ein Zylinderfortsatz 45 des Adapters 40 passt.

An dem anderen Ende kann der Hals 41 mit einer Greifscheibe 46 und einem Steilkegelschaft 47 oder anderen Mitteln versehen sein, die zur Verbindung zwischen dem Adapter 40 und der Arbeitsspindel 5 dienen.

Zur Abstützung des Werkzeugs 25 kann außerdem eine Gegenhalteeinrichtung 48 z.B. in Form eines Stützdorns 49 vorgesehen sein, der an einer Spindel 50 (Figur 1) gehalten ist. Die Spindel 50 ist an der Vorrichtung 3 ortsfest oder verstellbar angeordnet. Vorzugsweise weist sie Stellmittel zur Axialverstellung auf, so dass der Dorn 49 durch eine geeignete Bohrung des Werkstücks 4 ein- und ausgefahren werden kann. Die Spindel 50 ist vorzugsweise der Arbeitsspindel 5 gegenüber liegend angeordnet. Die Arbeitsspindel 5 und die Spindel 50 sind somit in Betrieb koaxial zu einer gemeinsamen Drehachse 51 angeordnet.

Die insoweit beschriebene Werkzeugmaschine 1 und Vorrichtung 3 arbeiten zur Bearbeitung des Werkstücks 4, insbesondere des Ausgleichsgehäuses 6, wie folgt zusammen:

Das Ausgleichsgehäuse 6 wird in die Vorrichtung 3 eingesetzt, die sich bereits in der Werkzeugmaschine 1 befindet oder es wird zusammen mit der Vorrichtung 3 in die Werkzeugmaschine 1 überführt. In der Vorrichtung 3 wird das Ausgleichsgehäuse 6 durch Betätigung der entsprechenden Ausrichteinrichtung(en) 21 zunächst ausgerichtet und dann gespannt. Dazu dient die Spanneinrichtung 20. Es kann in dem Bearbeitungszentrum zunächst wie ein gewöhnliches Werkstück bearbeitet werden. Soll aber die innere Formfläche 11 in diesem oder in einem anderen ähnlich gearteten Bearbeitungszentrum 1 bearbeitet werden, wird die in der Vorrichtung 3 vorgesehene Werkzeugspeichereinrichtung aktiviert. Mit anderen Worten, das zumindest eine Werkzeug 25 wird aus dem Werkzeugspeicherraum 24 in das Ausgleichsgehäuse 6 bewegt. Dazu wird die Positioniereinrichtung 26 entsprechend angesteuert. Die Positioniereinrichtung 26 überführt das Werkzeug 25 dabei in eine Position, in der seine Bohrung 39 mit Bohrungen des Ausgleichsgehäuses 6 fluchtet, beispielsweise mit seinen Querbohrungen 9, 10 oder, falls die Bearbeitung der die Achsbohrungen 7, 8 umgrenzenden Innenflächen gewünscht ist, mit den Achsbohrungen 7, 8 fluchtet. Es können dazu mehrere in den Figuren 5 bis 7 nicht weiter veranschaulichte Werkzeuge in unterschiedlichen Ausrichtpositionen bereit gehalten werden, um alternativ in den Innenraum des Ausgleichsgehäuses 6 eingefahren zu werden.

Ist das Werkzeug 25 in der in Figur 7 veranschaulichten Arbeitsposition angekommen, fahren die Arbeitsspindel 5 und die Spindel 50 axial aufeinander zu. In die Arbeitsspindel 5 wurde zuvor der Adapter 40 eingesetzt. Damit fahren der Adapter 40 mit seinem Hals 41 und der Stützdorn 49 durch entsprechende Bohrungen (9, 10) des Ausgleichsgehäuses und nehmen das Werkzeug 25 zwischen einander auf. Durch den Formschluss zwischen dem Kupplungsmittel 42 (unrunder Abschnitt) und dem Werkzeug 25 entsteht eine drehfeste Kupplung zwischen dem Werkzeug 25 und der Arbeitsspindel 5. Der Stützdorn 49 übt einen axialen Druck auf das Werkzeug 25 aus, so dass es fest zwischen dem Adapter 40 und dem Stützdorn 49 gehalten ist.

Der Stützdorn 49 kann beispielsweise pneumatisch oder auch hydraulisch mit Druck beaufschlagt sein, womit er in jeder Position eine axiale Druckkraft auf den Adapter 40 und die Arbeitsspindel 50 ausübt. Jede Axialbewegung der Arbeitsspindel 50 wird somit von dem Werkzeug 25 nachvollzogen. Es kann nun drehend an die Formfläche 11 herangeführt werden, um diese zu bearbeiten.

Ist der Bearbeitungsvorgang beendet, wird die Arbeitsspindel 50 so positioniert, dass die Klauen 28, 29 das Werkzeug 25 erreichen können. Die Positioniereinrichtung 26 und die Nachdrückeinrichtung 34 werden nun so betätigt, dass der Finger 35 von oben gegen das Werkzeug 25 drückt. Die Klauen 28, 29 werden nun von unten her über das Werkzeug 25 geschoben und rasten an diesem ein. Ist dies geschehen, kann die Nachdrückeinrichtung 34 wieder inaktiviert, d.h. der Finger 35 aus dem Ausgleichsgehäuse 6 heraus gefahren werden. Gleiches gilt für den Adapter 40 und den Stützdorn 49. Das Werkzeug 25 ist nun frei und kann in den Werkzeugspeicherraum 24 zurück gefahren werden. Die Bearbeitung der Formfläche 11 ist damit beendet oder kann mit einem anderen anderweitig gehaltenen Werkzeug auf ähnliche Weise fortgesetzt werden, indem dieses in den Innenraum des Ausgleichsgehäuses 6 eingefahren und mit der Arbeitsspindel 5 verbunden wird, wie vorstehend beschrieben.

Bei Erreichen des Standzeitendes kann das Werkzeug 25 zusammen mit dem Adapter 40 in das Werkzeugmagazin transportiert werden. Ein neues Werkzeug 25 kann nun mittels eines weiteren Adapters 40 aus dem Werkzeugmagazin zurück in die Vorrichtung transportiert werden. Der Ablauf zum Ankoppeln des Werkzeugs 25 an den Adapter 40 erfolgt dabei in gleicher Weise wie bei der Bearbeitung des Werkstücks. Allerdings ist die Vorrichtung leer, d.h. es befindet sich kein Werkstück in ihr. Auf diese Weise kann ein Werkzeug gegen ein baugleiches Werkzeug oder ein anderes Werkzeug ausgetauscht werden.

Eine zur Bearbeitung von Ausgleichsgehäusen 6 in Bearbeitungszentren 1 geeignete Vorrichtung 3 weist einen Werkzeugspeicherraum 24 auf, in dem zumindest ein Werkzeug 25 gehalten ist, das zur Bearbeitung einer inneren Formfläche 11 des Ausgleichsgehäuses 6 geeignet ist. Dem Werkzeug 25 ist eine Positioniereinrichtung 26 zugeordnet, die ebenfalls Teil der Vorrichtung 3 ist und mit dem das Werkzeug 25 in das Ausgleichsgehäuse 6 hinein und aus diesem heraus gefahren werden kann. Zur Herstellung einer drehfesten Verbindung zwischen dem Werkzeug 25 und einer Bearbeitungsspindel 5 der Werkzeugmaschine 1 dient ein entsprechender Adapter 40, der beispielsweise in dem Werkzeugmagazin der Werkzeugmaschine 1 bzw. des Bearbeitungszentrums wie ein gewöhnliches Werkzeug vorgehalten werden kann. Er wird bedarfsweise mittels einer Werkzeugwechseleinrichtung in die Arbeitsspindel 5 eingewechselt.

## Patentansprüche

1. Vorrichtung zur Bearbeitung, insbesondere spanenden Bearbeitung von Werkstücken (4), insbesondere von Ausgleichsgehäusen (6), in Werkzeugmaschinen:
- mit einer Basis (17), die zur Lagerung in der Werkzeugmaschine (1) eingerichtet ist,
- mit einer von der Basis (17) getragenen Spann- oder Halteeinrichtung (20) zur Lagerung des Werkstücks (4) während der Bearbeitung,
- mit wenigstens einem Werkzeug (25), das wenigstens im Ruhezustand von der Basis (17) getragen ist,
- wobei das Werkzeug (25) an der Basis (17) von einer Positioniereinrichtung (26) getragen ist, mittels derer das Werkzeug (25) zwischen einer Ruheposition und einer Arbeitsposition bewegbar gehalten ist.

2. Vorrichtung nach Anspruch 1, **dadurch gekennzeichnet, dass** die Positioniereinrichtung (26) eine fluidbetätigte Antriebseinrichtung (33) enthält.

3. Vorrichtung nach Anspruch 1, **dadurch gekennzeichnet, dass** die Positioniereinrichtung (26) eine durch einen Elektromotor betätigte Antriebseinrichtung (33) enthält.

4. Vorrichtung nach Anspruch 1, **dadurch gekennzeichnet, dass** die Positioniereinrichtung (33) eine Linearstelleinrichtung ist.

5. Vorrichtung nach Anspruch 1, **dadurch gekennzeichnet, dass** das Werkzeug (25) zur Bearbeitung einer Innenfläche (11) des als Hohlkörper ausgebildeten Werkstücks (4) eingerichtet ist.

6. Vorrichtung nach Anspruch 1, **dadurch gekennzeichnet, dass** das Werkzeug (25) zur spanenden Bearbeitung eingerichtet ist.

7. Vorrichtung nach Anspruch 1, **dadurch gekennzeichnet, dass** das Werkzeug (25) ein Fräswerkzeug ist.

8. Vorrichtung nach Anspruch 1, **dadurch gekennzeichnet, dass** das Werkzeug (25) ein Planfräser ist.

9. Vorrichtung nach Anspruch 1, **dadurch gekennzeichnet, dass** das Werkzeug (25) ein zur Bearbeitung einer sphärischen Fläche eingerichteter Fräser ist.

10. Vorrichtung nach Anspruch 1, **dadurch gekennzeichnet, dass** das Werkzeug (25) mit einer Kupplungseinrichtung (42) zur Ankupplung des Werkzeugs (25) innerhalb des Werkstücks (4) an eine Arbeitsspindel (5) der Werkzeugmaschine (1) versehen ist.

11. Vorrichtung nach Anspruch 1, **dadurch gekennzeichnet, dass** dem Werkzeug (25) ein Adapter (40) zugeordnet ist, der an einem Ende zur Verbindung mit dem Werkzeug (4) und an einer davon beabstandeten Stelle zur Verbindung mit einer Arbeitsspindel (5) der Werkzeugmaschine (1) eingerichtet ist.

12. Vorrichtung nach Anspruch 1, **dadurch gekennzeichnet, dass** an der Basis (17) eine Gegenhalteeinrichtung (48) vorgesehen ist, die dazu eingerichtet ist, das Werkzeug (25) bezüglich seiner Drehachse (51) axial abzustützen.

13. Vorrichtung nach Anspruch 12, **dadurch gekennzeichnet, dass** die Gegenhalteeinrichtung (48) eine drehbar gelagerte Spindel (50) enthält.

14. Vorrichtung nach Anspruch 13, **dadurch gekennzeichnet, dass** die drehbar gelagerte Spindel (50) axial verstellbar gehalten ist.

15. Vorrichtung nach Anspruch 13, **dadurch gekennzeichnet, dass** der Spindel (50) eine Axialstelleinrichtung zugeordnet ist.

16. Vorrichtung nach Anspruch 1, **dadurch gekennzeichnet, dass** die Halteeinrichtung (20) zur ortsfesten Lagerung des Werkstücks (4) eingerichtet ist.

17. Vorrichtung nach Anspruch 1, **dadurch gekennzeichnet, dass** die Halteeinrichtung (20) kraftbetätigte Klemmeinrichtungen (18, 19) aufweist.

18. Verfahren zur Bearbeitung, insbesondere spanenden Bearbeitung von Werkstücken (4), insbesondere von Ausgleichsgehäusen (6), in Werkzeugmaschinen:
- bei dem eine Spann- oder Halteeinrichtung (20) an ihrer Basis (17) in der Werkzeugmaschine (1) befestigt wird,
- an der Spann- oder Halteeinrichtung (20) vor oder nach der Überführung der Spann- oder Halteeinrichtung (20) in die Werkzeugmaschine wenigstens ein Werkstück (4) befestigt wird,
- vor der Überführung der Spann- oder Halteeinrichtung (20) in die Werkzeugmaschine an der der Spann- oder Halteeinrichtung (20) ein Werkzeug (25) angeordnet wird und
- das Werkzeug (25) zur Bearbeitung des Werkstücks (4) von einer an der Spann- oder Halteeinrichtung (20) vorgesehenen Positioniereinrichtung in einen Hohlraum des Werkstücks (4) überführt und dort mit der Arbeitsspindel (5) oder einem mit dieser verbunden Adapter (40) gekoppelt wird.

## Claims

1. Device for machining, in particular cutting, workpieces (4), in particular differential casings (6), in machine tools:
• with a base (17) fitted for mounting in the machine tool (1),
• with a clamping or holding device (20) supported by the base (17) for supporting the workpiece (4) during the machining operation,
• with at least one tool (25), which is supported by the base (17) at least in the resting state,
• wherein the tool (25) is supported on the base (17) by a positioning means (26), by means of which the tool (25) is movably held between a resting position and a working position.

2. Device according to claim 1, **characterised in that** the positioning means (26) contains a fluid-operated drive means (33).

3. Device according to claim 1, **characterised in that** the positioning means (26) contains a drive means (33) operated by an electric motor.

4. Device according to claim 1, **characterised in that** the positioning means (33) is a linear control means.

5. Device according to claim 1, **characterised in that** the tool (25) is fitted for machining an inside face (11) of the workpiece (4) configured as a hollow body.

6. Device according to claim 1, **characterised in that** the tool (25) is fitted for cutting.

7. Device according to claim 1, **characterised in that** the tool (25) is a milling cutter.

8. Device according to claim 1, **characterised in that** the tool (25) is a surface cutter.

9. Device according to claim 1, **characterised in that** the tool (25) is a cutter fitted for machining a spherical surface.

10. Device according to claim 1, **characterised in that** the tool (25) is provided with a coupling means (42) for coupling the tool (25) inside the workpiece (4) to a work spindle (5) of the machine tool (1).

11. Device according to claim 1, **characterised in that** the tool (25) has an associated adapter (40), which is fitted for connection to the tool (4) at one end and at a location spaced therefrom for connection to a work spindle (5) of the machine tool (1).

12. Device according to claim 1, **characterised in that** a steady (48) is provided on the base (17), which is fitted to axially support the tool (25) relative to its rotational axis (51).

13. Device according to claim 12, **characterised in that** the steady (48) contains a rotatably disposed spindle (50).

14. Device according to claim 13, **characterised in that** the rotatably disposed spindle (50) is held in an axially adjustable manner.

15. Device according to claim 13, **characterised in that** the spindle (50) has an associated axial control means.

16. Device according to claim 1, **characterised in that** the holding device (20) is fitted for fixed support of the workpiece (4).

17. Device according to claim 1, **characterised in that** the holding device (20) has power-operated clamping means (18, 19).

18. Process for machining, in particular cutting, workpieces (4), in particular differential casings (6), in machine tools:
• in which a clamping or holding device (20) is fastened in the machine tool (1) at its base (17),
• at least one workpiece (4) is fastened to the clamping or holding device (20) before or after transfer of the clamping or holding device (20) into the machine tool,
• a tool (25) is arranged on the clamping or holding device (20) before transfer of the clamping or holding device (20) into the machine tool, and
• for machining the workpiece (4) the tool (25) is moved into a cavity of the workpiece (4) by a positioning means provided on the clamping or holding device (20) and is coupled there to the work spindle (5) or an adapter (40) connected thereto.

## Revendications

1. Dispositif d'usinage, en particulier d'usinage par enlèvement de copeaux de pièces (4), notamment de boîtiers de compensation (6), dans des machines-outils, comprenant :
- une base (17) qui est agencée pour le montage dans la machine-outil (1),
- un dispositif de serrage ou de maintien (20) porté par la base (17) et destiné au support de la pièce (4) pendant l'usinage,
- au moins un outil (25) qui est porté par la base (17), au moins à l'état de repos,
- l'outil (25) étant porté sur la base (17) par un dispositif de positionnement (26) au moyen duquel l'outil (25) est tenu avec possibilité de déplacement entre une position de repos et une position de travail.

2. Dispositif selon la revendication 1, **caractérisé par le fait que** le dispositif de positionnement (26) comporte un moyen d'entraînement (33) actionné par un fluide.

3. Dispositif selon la revendication 1, **caractérisé par le fait que** le dispositif de positionnement (26) comporte un moyen d'entraînement (33) actionné par un moteur électrique.

4. Dispositif selon la revendication 1, **caractérisé par le fait que** le dispositif de positionnement (26) est un dispositif de déplacement linéaire.

5. Dispositif selon la revendication 1, **caractérisé par le fait que** l'outil (25) est agencé pour l'usinage d'une face intérieure (11) de la pièce (4) conformée en corps creux.

6. Dispositif selon la revendication 1, **caractérisé par le fait que** l'outil (25) est agencé pour l'usinage par enlèvement de copeaux.

7. Dispositif selon la revendication 1, **caractérisé par le fait que** l'outil (25) est un outil de fraisage.

8. Dispositif selon la revendication 1, **caractérisé par le fait que** l'outil (25) est une fraise à surfacer.

9. Dispositif selon la revendication 1, **caractérisé par le fait que** l'outil (25) est une fraise agencée pour l'usinage d'une surface sphérique.

10. Dispositif selon la revendication 1, **caractérisé par le fait que** l'outil (25) est pourvu d'un moyen d'accouplement (42) pour accoupler l'outil (25), à l'intérieur de la pièce (4), à une broche d'usinage (5) de la machine-outil (1).

11. Dispositif selon la revendication 1, **caractérisé par le fait qu'**il est associé à l'outil (25) un adaptateur (40) dont une extrémité est agencée pour être reliée à l'outil (25) et dont un point, qui est espacé de ladite extrémité, est conçu pour être relié à une broche d'usinage (5) de la machine-outil (1).

12. Dispositif selon la revendication 1, **caractérisé par le fait que** la base (17) comporte un moyen de contre-appui (48) qui est agencé pour soutenir l'outil (25) axialement par rapport à son axe de rotation (51).

13. Dispositif selon la revendication 12, **caractérisé par le fait que** le moyen de contre-appui (48) comprend une broche (50) montée mobile en rotation.

14. Dispositif selon la revendication 13, **caractérisé par le fait que** la broche (50) montée mobile en rotation est tenue avec possibilité de réglage axial.

15. Dispositif selon la revendication 13, **caractérisé par le fait qu'**un moyen de réglage axial est associé à la broche (50).

16. Dispositif selon la revendication 1, **caractérisé par le fait que** le dispositif de maintien (20) est agencé pour le support fixe de la pièce à usiner (4).

17. Dispositif selon la revendication 1, **caractérisé par le fait que** le dispositif de maintien (20) présente des moyens de serrage (18, 19) motorisés.

18. Procédé d'usinage, en particulier d'usinage par enlèvement de copeaux de pièces (4), notamment de boîtiers de compensation (6), dans des machines-outils, selon lequel
- un dispositif de serrage ou de maintien (20) est fixé par sa base (17) dans la machine-outil (1),
- au moins une pièce à usiner (4) est fixée au dispositif de serrage ou de maintien (20), avant ou après le transfert du dispositif (20) dans la machine-outil,
- avant le transfert du dispositif de serrage ou de maintien (20) dans la machine-outil, un outil (25) est monté sur le dispositif (20), et
- pour l'usinage de la pièce (4), l'outil (25) est transféré dans une cavité de la pièce (4), par un moyen de positionnement prévu sur le dispositif de serrage ou de maintien (20), et est accouplé dans cette cavité avec la broche de travail (5) ou un adaptateur (40) relié à celle-ci.
